# EUROPEAN PATENT APPLICATION

(11) **EP 1 505 681 A2**
(43) Date of publication of application: **09.02.2005**
(21) Application number: 04017865.9
(22) Date of filing: 28.07.2004
(51) Int. Cl.: H01M 14/00, H01M 8/16

(54) **Biochemically-powered self-exciting electric power source**

(30) Priority: 04.08.2003 IT MI20031603
(71) Applicant: Milesi, Federico, 20129 Milano (IT)
(72) Inventor: Milesi, Federico, 20129 Milano (IT)
(74) Representative: Modiano, Guido, Dr.-Ing.

(57) **Abstract**

A biochemically-powered self-exciting electric power source, comprising, inside a container (1) for containing an electrolyte (2), an anode (3) which is coated with a biochemical compound (10a), a first electrode (20) and a second electrode (21), which are electrically separated each other and are immersed in the electrolyte (2), and an electrical stimulator (30) connected between the anode (3) and the first electrode (20), a user load (15) being arranged between the anode (3) and the second electrode (21), the first electrode (20) being made of electrolytic iron, washed with aqueous ammonia, the anode (3) being made of pure nickel, and the second electrode (21) being made of cadmium-plated iron.

## Description

The present invention relates to a biochemically-powered self-exciting electric power source.

As is known, EP 0635895, assumed included herein by reference, discloses a biochemically-powered electric power source that is generally constituted by a container for containing an electrolyte in which an anode is immersed, said anode being coated with a biochemical compound based on spurge latex and being arranged between a first electrode and a second electrode, which are electrically separated each other and immersed in the electrolyte.

An electrical stimulator is provided to power the source, emits a pulse, preferably of the square-wave type, and is connected between the anode and the first electrode, while the user load can be connected between the anode and the second electrode.

This embodiment has proved to be valid in many respects but has been found to be susceptible of improvements, especially as regards increasing the power that can be generated by acting on the structural configuration of the electrodes.

The aim of the invention is to improve the performance of the power source by providing a new type of electrode which, thanks to a particular treatment and particular materials that can be used, allows to significantly increase the operating power and duration.

Within this aim, an object of the invention is to provide an electric power source in which the composition of the biochemical compound is improved, so as to achieve a particularly high performance.

Another object of the present invention is to provide an electric power source that thanks to its particular constructive characteristics is capable of giving the greatest assurances of reliability and safety in use.

Another object of the present invention is to provide an electric power source that can be easily obtained starting from commonly commercially available elements and materials and is also competitive from a merely economical standpoint.

This aim and these and other objects that will become better apparent hereinafter are achieved by a biochemically-powered self-exciting electric power source, according to the invention, comprising, inside a container for containing an electrolyte, an anode which is coated with a biochemical compound, a first electrode and a second electrode, which are electrically separated each other and are immersed in said electrolyte, an electrical stimulator connected between said anode and said first electrode, a user load being arrangeable between said anode and said second electrode, characterized in that said first electrode is made of electrolytic iron, washed with aqueous ammonia, said anode is made of pure nickel, and said second electrode is made of cadmium-plated iron.

Further characteristics and advantages of the present invention will become better apparent from the description of a preferred but not exclusive embodiment of a biochemically-powered self-exciting electric power source, illustrated by way of nonlimiting example in the accompanying drawings, wherein:
Figure 1 is a schematic sectional view of the electric power source according to the invention;
Figure 2 is an exploded view of the electrodes and of the anode;
Figure 3 is a schematic layered view of the configuration of the anode.

With reference to the figures, the biochemically-powered self-exciting electric power source, according to the invention, comprises a container 1, inside which there is an electrolyte 2, which is advantageously constituted by a semiliquid solution composed of pure nickel acetate in 70% double-distilled water.

An anode, generally designated by the reference numeral 3, is arranged inside the container 1 and is advantageously provided by a pure nickel plate 4, on the faces whereof a gummy biochemical compound, designated by the reference numeral 10a and provided by way of example by means of a spurge latex, is applied.

According to a convenient embodiment, the biochemical compound is obtained by means of 20 grams of spurge latex, preferably collected when the plant is in bloom, which is diluted in one deciliter of water and put to slowly boil until it becomes a pasty mass.

This operation, which must be performed carefully in order to prevent the mix from burning, must be performed advantageously in the vicinity of an aspirator.

The resulting mix is arranged in a vessel that is covered by 10 grams of nitrobenzene mixed with 10 grams of ferric nitrate and with 10 grams of 90° ethyl alcohol.

The system is left to rest in an environment at 25-30 °C for approximately 24 hours so as to obtain a yellowish colloid.

The colloid is then mixed in aqueous ammonia with 50 grams of potassium bichromate and 10 grams of nickel acetate.

The compound is poured into a vessel that contains a resin of the "Sintolit" type with the corresponding hardener, and is mixed for a few minutes until a mix is obtained which can be spread with a spatula on an insulating support 5 provided with through holes 10.

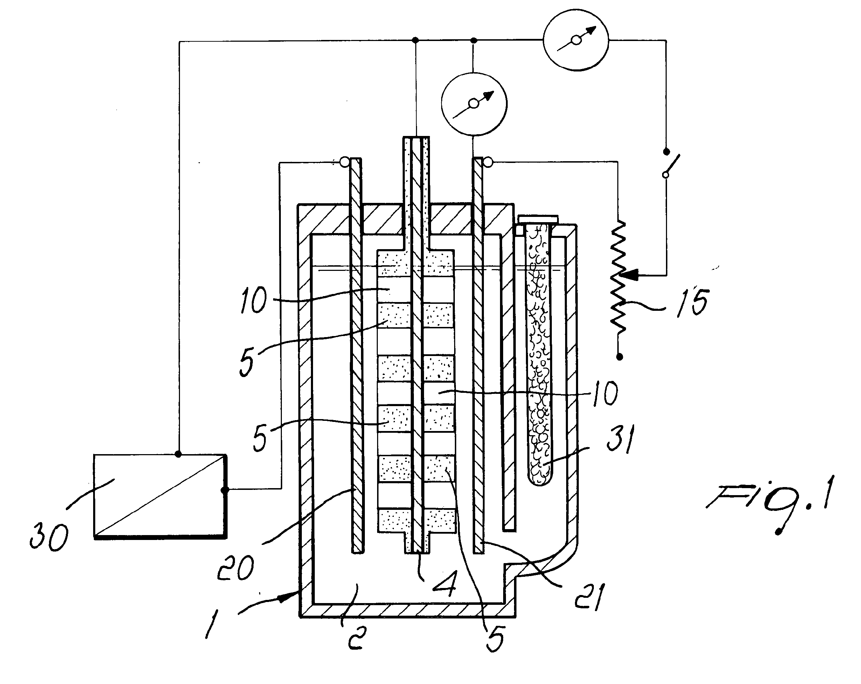

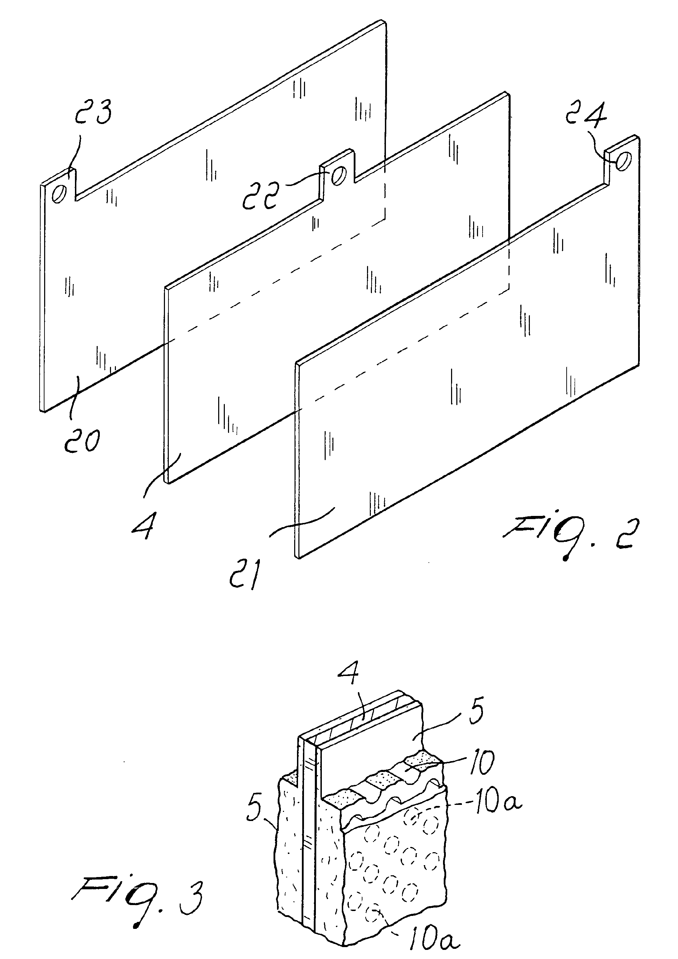

The compound passes through the holes 10 of the plates 5, as shown in Figure 3, and remains incorporated in such holes, which are then placed in contact with the nickel plate, obtaining a monolithic piece which is substantially provided with the nickel plate at the center and, on each of its two faces, with an insulating supporting element 5, the through holes whereof are filled with the biochemical compound 10a, so that the compound is in contact with the nickel plate and with the electrolyte.

A first electrode, designated by the reference numeral 20, and a second electrode 21 are provided inside the container 1, which faces the anode 3; the electrodes face the anode 3 on opposite sides without having a direct electrical connection.

The anode 3 and the electrodes 20 and 21 preferably have the same substantially rectangular contour, with a protruding central projection 22 on the anode and lateral projections 23 and 24 on the electrodes, arranged on opposite sides with respect to the projection 22.

In a preferred but not exclusive embodiment, suitable for the quantity of the biochemical compound obtained by proceeding as described above, the dimensions of the anode 3 and of the electrodes 20 and 21 are equal to approximately 10 cm by approximately 5 cm.

An important feature of the invention resides in that the electrode 21 is made of cadmium-plated iron and that the cadmium plating is performed with an electroplating process, by depositing approximately 5 microns of material.

However, excellent results are obtained with equivalent methods and materials.

The electrode 20 is advantageously obtained by means of electrolytic iron, which is subjected to washing with aqueous ammonia. The electrode is kept in an ammonia bath for approximately 10 minutes and, after drying, is treated with a material obtained by mixing together three spoonfuls of rustproofing paint, lead oxide, mixed with 15 grams of alumina powder, which is brushed onto the plate with three coats after the drying of each layer.

An electrical stimulator, designated by the reference numeral 30, is connected to the electrode 20 and is constituted by an oscillator, which is adapted to generate a square-wave frequency, or by a source of pulses induced by means of a rotating magnet.

The action of the electrical stimulation on the biochemical compound is meant to create an increase in voltage and current, which is many times higher than the intensity required by the electrical stimulator.

A load, generally designated by the reference numeral 15 and represented schematically by means of a variable resistor, can be applied between the second electrode 21 and the anode 3; the type of load that can be applied can of course be varied in any case.

In order to regenerate the source, a container 31 of active material to be introduced in the electrolyte is provided; such material is advantageously constituted by a mixture of sodium chloride and potassium chloride or sodium chloride and calcium carbonate, optionally with the addition of potassium bicarbonate.

The pack, constituted by way of example by the pure nickel electrode and the insulating sheets in which the biochemical compound is placed, is replaced periodically.

During product engineering, the compound 10a, which in the example is formed on a basis of spurge latex, can be provided or supplied by way of other methods.

Instead of spurge, it is in fact also possible to use a natural or synthetic component that has the same characteristics, in particular a compound based on hydrocarbons, including petroleum and its derivatives, which have a composition that is very similar to spurge liquid, which is characterized by a composition that is similar to a hydrocarbon and by electrical semiconduction.

From what has been described above, it is thus evident that the invention achieves the intended aim and objects, and in particular the fact is stressed that the particular solutions used to provide the electrodes and to obtain the biochemical compound allow to considerably increase the electric power that can be generated by the source according to the invention.

It is obviously possible to modify a whole series of elements with equivalent elements without thereby altering anything in operation; in particular, and as mentioned, the natural spurge liquid can be replaced with synthetic or natural compounds that have the same characteristics and in particular the ones based on the hydrocarbons that constitute most of natural spurge.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application no. MI2003A001603, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A biochemically-powered self-exciting electric power source, comprising, inside a container for containing an electrolyte, an anode which is coated with a biochemical compound, a first electrode and a second electrode, which are electrically separated each other and are immersed in said electrolyte, an electrical stimulator connected between said anode and said first electrode, a user load being arrangeable between said anode and said second electrode, **characterized in that** said first electrode is made of electrolytic iron, washed with aqueous ammonia, said anode is made of pure nickel, and said second electrode is made of cadmium-plated iron.

2. The source according to claim 1, **characterized in that** said biochemical power comprises a biochemical compound that is formed by spurge latex diluted in water and containing nitrobenzene, ferric nitrate and ethyl alcohol, all this being mixed with potassium bichromate and nickel acetate, mixed with a resin with hardener to obtain a mixture that is spread on an insulating support provided with through holes that is applied to said anode.

3. The source according to claim 1, **characterized in that** said second electrode has a cadmium plating with a thickness comprised between 4 and 6 microns.

4. The source according to claim 1, **characterized in that** said electrodes and said anode have a substantially rectangular and identical shape, said anode being provided with a protruding central projection in an upward region, said electrodes being provided with lateral projections that protrude on opposite sides with respect to said central projection.

5. The source according to claim 1, **characterized in that** it comprises an active material for regenerating the source to be introduced in said electrolyte, said active material being constituted by a mixture of sodium chloride and of potassium chloride.

6. The source according to claim 5, **characterized in that** said active material comprises sodium chloride or potassium chloride and calcium carbonate.

7. The source according to claim 5, **characterized in that** said active material comprises sodium chloride or potassium chloride with calcium carbonate and potassium bicarbonate.

8. The source according to claim 2, **characterized in that** said spurge latex is of a natural type.

9. The source according to claim 2, **characterized in that** said spurge latex is of a synthetic type or is constituted by other natural or synthetic compounds with similar chemical and physical characteristics.

10. The source according to claim 2, **characterized in that** said liquid or latex of spurge is replaced with synthetic or natural compounds having the same characteristics, based on hydrocarbons or petroleum derivatives.

11. A method for providing a biochemical compound for a biochemically-powered self-exciting electric power source, comprising the steps of mixing spurge latex or equivalent compounds with water and slowly boiling until a pasty mass mixture is obtained; covering the mixture with nitrobenzene mixed with ferric nitrate and ethyl alcohol; leaving to rest in an environment at 25-30 °C for approximately 24 hours until a yellowish colloid is obtained; mixing the colloid in aqueous ammonia with potassium bichromate and nickel acetate; pouring a resin with a corresponding hardener in order to obtain a final mixture that can be spread by means of a spatula.

12. A method for treating an electrode for an electric power source, **characterized in that** it provides a plate made of electrolytic iron, said plate being subjected to a wash with aqueous ammonia, said plate being kept in the ammonia bath for approximately 10 minutes, drying being performed, and treatment being performed with a material obtained by mixing lead oxide mixed with alumina powder.
